# EUROPEAN PATENT SPECIFICATION

(11) **EP 4 180 699 B1**
(45) Date of publication and mention of the grant of the patent: **06.08.2025**
(21) Application number: 21838181.2
(22) Date of filing: 16.06.2021
(51) Int. Cl.: F16K 31/04, F16K 31/36, F16K 39/02, F16K 31/50, F16K 31/53

(54) **ELECTRIC VALVE**
ELEKTRISCHES VENTIL
ÉLECTROVANNE

(30) Priority: 10.07.2020 JP 2020119410
(43) Date of publication of application: 17.05.2023
(73) Proprietor: Fujikoki Corporation, Tokyo 158-0082 (JP)
(72) Inventor: YANAGISAWA Shu, Tokyo 158-0082 (JP)
(74) Representative: Ter Meer Steinmeister & Partner
(86) International application number: PCT/JP2021/022861
(87) International publication number: WO 2022/009632

(56) References cited:
- CN-A- 109 578 660
- CN-U- 204 533 762
- JP-A- 2000 346 225
- JP-A- 2014 137 127
- JP-A- 2014 137 127
- JP-A- 2016 540 933
- JP-B2- 6 527 837

## Description

### Technical Field

The present invention relates to an electric valve.

### Background Art

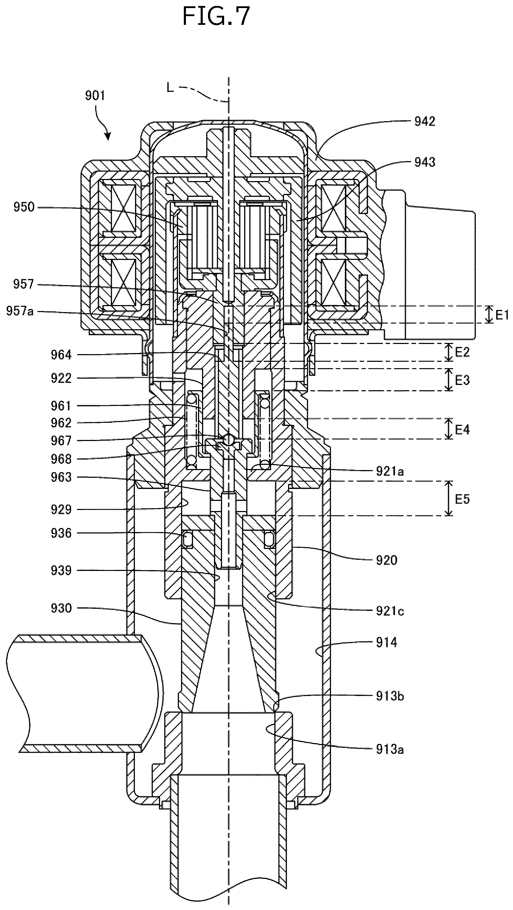

JP 2013-130271 A describes an example of an electric valve according to the related art. The electric valve 901 according to the related art illustrated in Fig. 7 includes a valve member 930. A thrust transmitting member 963 is fixed to the valve member 930. The valve member 930 opens and closes a valve port 913a that is open to a valve chamber 914.

The electric valve 901 includes a stepping motor. The stepping motor includes a stator 942 and a rotor 943. Rotational force of the stepping motor is transmitted to a rotary elevation shaft 964 via a planetary gear mechanism 950. The rotary elevation shaft 964 is screwed into a bearing member 922. A screw-feed action moves the rotary elevation shaft 964 in an up-and-down direction. When the rotary elevation shaft 964 moves downwards, the rotary elevation shaft 964 pushes the thrust transmitting member 963 downwards via a ball 967 and a ball receiving seat 968. When the rotary elevation shaft 964 moves upwards, a spring receiving member 961, which is pushed upwards by a valve opening spring 962, pulls the thrust transmitting member 963 upwards. The valve member 930 moves in the up-and-down direction with the thrust transmitting member 963.

In the electric valve 901, the valve member 930 is disposed in a valve-member guide hole 921c of a supporting member 920. A sealing member 936 is disposed between the valve member 930 and the supporting member 920. The sealing member 936 separates the valve chamber 914 from a space next to the upper side of the valve member 930 (a back-pressure chamber 929) in the valve-member guide hole 921c. When the lower end of the valve member 930 comes into contact with a valve seat 913b and closes the valve port 913a, the electric valve 901 is in a valve-closing state. In the valve-closing state, the valve port 913a is connected to the back-pressure chamber 929 via a pressure equalizing passage 939, which is provided in the valve member 930 and the thrust transmitting member 963. In this structure, an upward fluid pressure applied to the valve member 930 is counterbalanced by a downward fluid pressure applied to the valve member 930.

CN 204 533 762 U discloses a speed reduction mechanism, comprising: A speed reduction mechanism housing; a reduction gear train disposed in the reduction mechanism housing; an output shaft connected to the reduction gear train; and an axial limiting mechanism provided in the speed reduction mechanism, characterized in that the axial limiting mechanism includes a shaft-side limiting member integrally formed on or fixedly connected to the output shaft and a housing-side limiting member integrally formed on or fixedly connected to the reduction mechanism housing, and the shaft-side limiting member and the housing-side limiting member are suitable for cooperating with each other to limit the axial displacement of the output shaft.

JP 6 527837 B2 discloses a pressure balance type motor valve including a valve member mounted on a connection rod via a bearing as a rotary bearing, the connection rod being adapted to be moved up and down by the rotation of a rotor of a stepping motor and a screw feed mechanism, for maintaining the stable operating performance of the bearing. An outside space and an inside space of the valve member, the inside of the bearing, and a conduction path constitute a pressure equalization flow path to conduct a valve port and a back pressure chamber. In a valve element of the valve member, a coil spring and a strainer are arranged between the bearing and a snap ring. The strainer is held between the coil spring and the snap ring and thereby fixed to the inside of the valve element.

### Summary of Invention

### Technical Problem

The electric valve 901 may be used in a system with a relatively large difference between inlet and outlet fluid pressure. In the electric valve 901, the sealing member 936 is strongly pressed to the supporting member 920 and slides on the supporting member 920 to suppress fluid leakage between the valve chamber 914 and the back-pressure chamber 929. This causes the frictional force of the sealing member 936 to be large, and the electric valve 901 should have a large rotational force of the stepping motor and a large spring force of the valve opening spring 962.

In the electric valve 901, the ball 967 slides with respect to the rotary elevation shaft 964 (or the ball receiving seat 968). The ball 967 transmits only downward pushing force of the rotary elevation shaft 964 to the thrust transmitting member 963 and transmits no rotational force of the rotary elevation shaft 964. Forces concentrate on the ball 967, and the ball 967 wears out fast. Wearing of the ball 967 is one factor that reduces the life of the electric valve 901. Additionally, when the rotary elevation shaft 964 moves downwards, the stepping motor outputs the rotational force including a force component to compress the valve opening spring 962. Therefore, the electric valve 901 has a high power consumption.

In view of this, it is an object of the present invention to provide an electric valve with a long life and a low power consumption.

### Solution to Problem

To achieve the object above, an electric valve according to one aspect of the present invention includes a valve body that includes a valve chamber and a valve port, a valve member that opens and closes the valve port, a supporting member that supports the valve member to be capable of advancing and retracting with respect to the valve port, a driving shaft that includes an external thread portion and is disposed in a direction of advancing and retracting the valve member, a rolling bearing that rotatably supports the driving shaft and is held by the supporting member, a planetary gear mechanism that is connected to the driving shaft, and an internal thread member with a cylindrical shape that is fixed to the valve member and into which the external thread portion is screwed. The supporting member supports the internal thread member in a manner that restricts rotation of the internal thread member about an axis and allows movement of the internal thread member in a direction of the axis.

In the electric valve according to the present invention, the rolling bearing rotatably supports the driving shaft. The external thread portion of the driving shaft is screwed into the internal thread member. The supporting member supports the internal thread member in the manner that restricts the rotation of the internal thread member about the axis and allows the movement of the internal thread member in the direction of the axis. As a result, when the driving shaft connected to the planetary gear mechanism rotates, a screw-feed action moves the internal thread member in the direction of the axis (the direction of advancing and retracting the valve member). The movement of the internal thread member applies force in the direction of the axis to the driving shaft, and the force is distributed to multiple rolling elements of the rolling bearing. Therefore, concentration of the force can be suppressed in the electric valve, and it is possible to enhance the life of the electric valve. Additionally, the screw-feed action advances and retracts the valve member with respect to the valve port. Therefore, the electric valve has a low power consumption compared to an electric valve with a structure including a valve opening spring.

In the present invention, the supporting member includes a valve-member guide hole in which the valve member is disposed. The internal thread member includes a lateral hole that extends from an outer surface to an inner surface of the internal thread member. An inner space of the internal thread member and the lateral hole of the internal thread member are a pressure equalizing passage that connects, in a valve-closing state where a first end of the valve member is in contact with a valve seat of the valve port, the valve port to a back-pressure chamber, which is a space next to a second end of the valve member in the valve-member guide hole. The external thread portion enters the internal thread member to a position where the external thread portion closes the lateral hole in a full-open state where the valve member is farthest from the valve seat. As a result, in the electric valve, the external thread portion of the driving shaft closes the pressure equalizing passage in the full-open state. Therefore, entry of foreign matter included in fluid into the back-pressure chamber can be suppressed.

In the present invention, preferably, the driving shaft includes a base portion that is integrally coupled to the external thread portion and is connected to an output part of the planetary gear mechanism. Preferably, the rolling bearing is a radial ball bearing. Preferably, the supporting member supports an outer ring of the rolling bearing. Preferably, the base portion and a nut screwed onto the external thread portion hold an inner ring of the rolling bearing therebetween. As a result, the rolling bearing can support the driving shaft with a simple structure combining the external thread portion and the nut. Additionally, the pressurization of the inner ring of the rolling bearing can be easily controlled by using the nut compared to a structure in which the driving shaft is press-fitted into the inner ring of the rolling bearing.

In the present invention, preferably, a transverse sectional contour of the internal thread member has a polygonal shape. Preferably, the supporting member includes a partition wall that divides an inner space of the supporting member in the direction of the axis. Preferably, the partition wall includes a supporting hole in which the internal thread member is disposed. Preferably, the supporting hole has a same shape as the transverse sectional contour of the internal thread member. As a result, the supporting member can support the internal thread member in the manner that restricts the rotation of the internal thread member about the axis and allows the movement of the internal thread member in the direction of the axis in a relatively simple structure.

### Advantageous Effects of Invention

According to the present invention, it is possible to enhance the life of the electric valve and reduce the power consumption of the electric valve.

### Brief Description of Drawings

[Fig. 1] Fig. 1 is a longitudinal sectional view of an electric valve according to one embodiment of the present invention in a valve-closing state.
[Fig. 2] Fig. 2 is a longitudinal sectional view of the electric valve in Fig. 1 in a full-open state.
[Fig. 3] Fig. 3 is a sectional view taken along line III-III of Fig. 1.
[Fig. 4] Fig. 4 is a sectional view taken along line IV-IV of Fig. 1.
[Fig. 5] Fig. 5 is a longitudinal sectional view of an electric valve configured to include a valve opening spring according to another embodiment of the present invention.
[Fig. 6] Fig. 6 is a longitudinal sectional view of an electric valve configured to include two thrust ball bearings according to still another embodiment of the present invention.
[Fig. 7] Fig. 7 is a sectional view of an electric valve according to the related art.

### Description of Embodiments

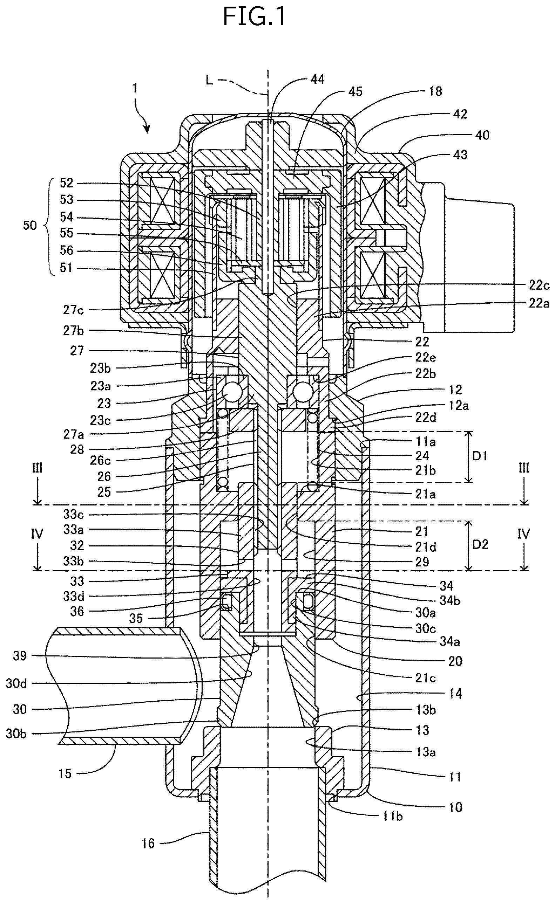

Hereinafter, an electric valve according to an embodiment of the present invention is described with reference to Fig. 1 to Fig. 4.

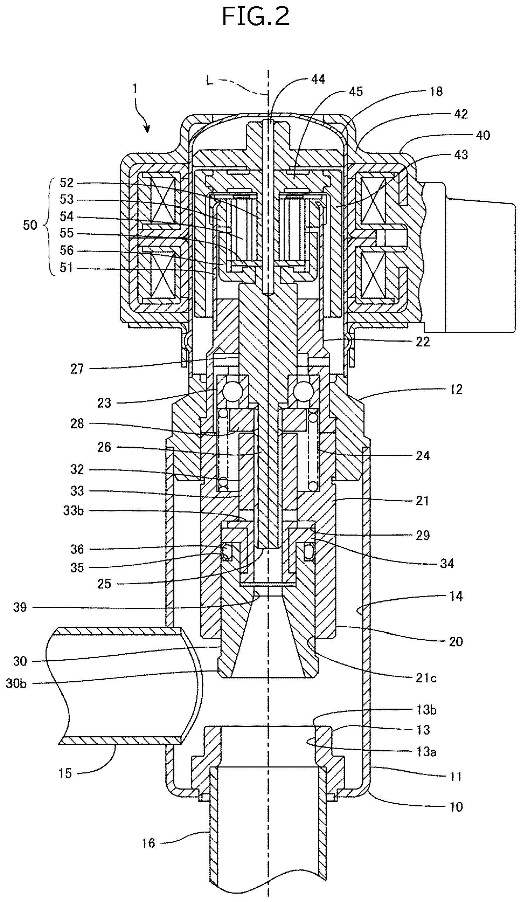

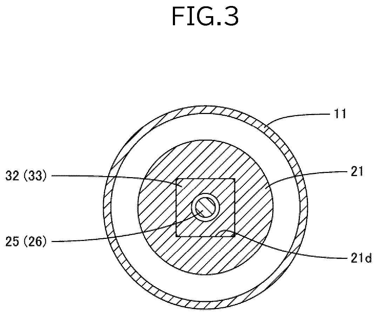

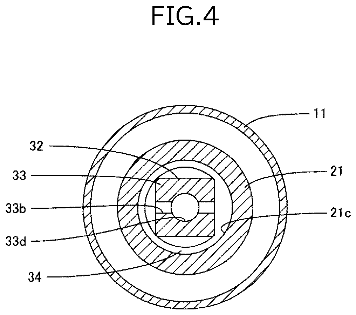

Figs. 1 and 2 are longitudinal sectional views (sectional views taken along an axis L) of an electric valve according to one embodiment of the present invention. Fig. 1 illustrates the electric valve in a valve-closing state. Fig. 2 illustrates the electric valve in a full-open state. Fig. 3 is a sectional view taken along line III-III of Fig. 1. Fig. 4 is a sectional view taken along line IV-IV of Fig. 1.

An electric valve 1 according to the present embodiment is used as an expansion valve in, for example, a heat pump heating and cooling system or the like. The electric valve 1 is capable of allowing fluid (refrigerant) to flow in both directions.

The electric valve 1 includes a valve body 10, a can 18, a supporting member 20, a rolling bearing 23, a driving shaft 25, a valve member 30, an internal thread member 32, a sealing member 36, and a valve-member driving section 40.

The valve body 10 includes a tubular member 11, a holder 12, and a valve seat member 13.

The tubular member 11 has a substantially circular cylindrical shape. The tubular member 11 has a valve chamber 14 inside.

The holder 12 has a stepped, substantially circular cylindrical shape. A lower portion of the holder 12 has an outer diameter larger than that of an upper portion of the holder 12. The lower portion of the holder 12 is fitted into an upper end opening 11a of the tubular member 11. The holder 12 is welded to the tubular member 11. The holder 12 includes a portion which is disposed in the tubular member 11 and which has a length in a direction of the axis L enough to maintain a fitting relationship between the tubular member 11 and the holder 12 even after welding. The holder 12 includes a holding surface 12a. The holding surface 12a is a circular annular plane facing downwards and is disposed inside the holder 12.

The valve seat member 13 has a substantially circular cylindrical shape. The valve seat member 13 is housed in the valve chamber 14. A lower portion of the valve seat member 13 is fitted into a lower end opening 11b of the tubular member 11. The valve seat member 13 is brazed to the tubular member 11. The valve seat member 13 has a valve port 13a, which is a circular hole. The valve port 13a is open to the valve chamber 14. A valve seat 13b is provided in the inner peripheral edge of the upper end of the valve seat member 13. The valve seat 13b has a circular annular shape. The valve seat 13b encloses the valve port 13a.

A first conduit 15 is brazed to the tubular member 11. The first conduit 15 extends through the tubular member 11 in a lateral direction (a direction perpendicular to the axis L) and is connected to the valve chamber 14. A second conduit 16 is brazed to the valve seat member 13. The second conduit 16 is connected to the valve port 13a. Preferably, the first conduit 15 includes a portion which is disposed in the tubular member 11 and which is long enough to suppress the entry of the molten solder (a fillet) into the first conduit 15 from the end of the first conduit 15 in the valve chamber 14.

The can 18 has a circular cylindrical shape with its upper end closed. The lower end of the can 18 is welded to the upper portion of the holder 12.

The supporting member 20 includes a valve-member supporting portion 21 and a driving-shaft supporting portion 22.

The valve-member supporting portion 21 has a circular cylindrical shape. An upper portion of the valve-member supporting portion 21 is press-fitted into the holder 12. A lower portion of the valve-member supporting portion 21 and the valve seat member 13 are arranged in an up-and-down direction (the direction of the axis L) with a space therebetween. The lower portion of the valve-member supporting portion 21 faces the valve seat member 13 in the up-and-down direction. The valve-member supporting portion 21 includes a partition wall 21a. The partition wall 21a divides an inner space of the valve-member supporting portion 21 into spaces in the up-and-down direction. The space next to the upper side of the partition wall 21a is a spring chamber 21b. The space next to the lower side of the partition wall 21a is a valve-member guide hole 21c. The partition wall 21a has a supporting hole 21d. The supporting hole 21d has a square shape.

An upper portion 22a of the driving-shaft supporting portion 22 has a circular columnar shape. A lower portion 22b of the driving-shaft supporting portion 22 has a circular cylindrical shape. The upper portion 22a of the driving-shaft supporting portion 22 has a stem hole 22c. The stem hole 22c extends through the upper portion 22a in the up-and-down direction. A projecting portion 22d, which has a circular annular shape, is disposed at the lower end of the lower portion 22b of the driving-shaft supporting portion 22 and projects radially outwards. The holding surface 12a of the holder 12 and the upper portion of the valve-member supporting portion 21, which is press-fitted into the holder 12, hold the projecting portion 22d therebetween. The lower portion 22b of the driving-shaft supporting portion 22 defines the spring chamber 21b together with the valve-member supporting portion 21. The lower portion 22b of the driving-shaft supporting portion 22 includes a receiving surface 22e. The receiving surface 22e is a circular annular plane facing downwards and is disposed inside the lower portion 22b.

The rolling bearing 23 is a radial ball bearing. The rolling bearing 23 includes an outer ring 23a, an inner ring 23b, and balls 23c. The balls 23c are multiple rolling elements disposed between the outer ring 23a and the inner ring 23b. The rolling bearing 23 is disposed inside the lower portion 22b of the driving-shaft supporting portion 22. The upper end of the outer ring 23a is in contact with the receiving surface 22e of the lower portion 22b of the driving-shaft supporting portion 22. A holding spring 24, which is in a compressed state, is disposed between the lower end of the outer ring 23a and the partition wall 21a. The holding spring 24 presses the outer ring 23a to the receiving surface 22e. The holding spring 24 pressurizes the outer ring 23a. A thrust bearing can be employed as the rolling bearing 23.

The driving shaft 25 is disposed in the up-and-down direction. The driving shaft 25 integrally includes an external thread portion 26 and a base portion 27. The driving shaft 25 is formed, for example, by cutting a metal workpiece made of stainless steel or the like. The external thread portion 26 has a circular columnar shape. The external thread portion 26 includes an external thread 26c. The external thread 26c is disposed on the outer circumferential surface of the external thread portion 26. The base portion 27 includes a first stem portion 27a, a second stem portion 27b, and a connecting portion 27c.

The first stem portion 27a has a circular columnar shape. The first stem portion 27a is coupled to the upper end of the external thread portion 26. The diameter of the first stem portion 27a is larger than the diameter of the external thread portion 26 and is equal to the inner diameter of the inner ring 23b of the rolling bearing 23. The first stem portion 27a is inserted into the inner ring 23b. The first stem portion 27a is disposed in the inner ring 23b. The first stem portion 27a is supported rotatably about the axis L by the rolling bearing 23.

The second stem portion 27b has a circular columnar shape. The second stem portion 27b is coupled to the upper end of the first stem portion 27a. The diameter of the second stem portion 27b is larger than the diameter of the first stem portion 27a and is equal to the diameter of the stem hole 22c of the driving-shaft supporting portion 22. The second stem portion 27b is inserted into the stem hole 22c. The second stem portion 27b is disposed in the stem hole 22c. The second stem portion 27b is supported rotatably about the axis L by the driving-shaft supporting portion 22. The second stem portion 27b and a nut 28, which is screwed onto the external thread portion 26, hold the inner ring 23b of the rolling bearing 23 therebetween. The degree of tightening of the nut 28 determines the pressure applied to the inner ring 23b.

The connecting portion 27c projects from the upper surface of the second stem portion 27b. The connecting portion 27c has a circular columnar shape or a prismatic columnar shape. The connecting portion 27c is connected to a planetary gear mechanism 50 of the valve-member driving section 40.

The valve member 30 opens and closes the valve port 13a. The valve member 30 has a substantially circular cylindrical shape. The outer diameter of the valve member 30 is equal to the diameter of the valve-member guide hole 21c of the supporting member 20. The valve member 30 is inserted into the valve-member guide hole 21c. The valve member 30 is disposed in the valve-member guide hole 21c. A space next to the upper side of the valve member 30 in the valve-member guide hole 21c is a back-pressure chamber 29. The valve member 30 can slide and move in the up-and-down direction in the valve-member guide hole 21c. The valve member 30 faces the valve seat member 13 in the up-and-down direction. The supporting member 20 guides an up-and-down movement of the valve member 30. The supporting member 20 supports the valve member 30 so that the valve member 30 is allowed to advance and retract with respect to the valve port 13a.

The internal thread member 32 has a substantially quadrilateral cylindrical shape. The internal thread member 32 includes a main body portion 33 made of synthetic resin and a press-fitting frame portion 34 made of metal. The main body portion 33 and press-fitting frame portion 34 are integrated by insert molding.

The main body portion 33 has a substantially quadrilateral cylindrical shape. In the present embodiment, the transverse sectional contour of the main body portion 33 has a square shape. The supporting hole 21d of the supporting member 20 has a square shape that is the same shape as the transverse sectional contour of the main body portion 33. The main body portion 33 is inserted into the supporting hole 21d. The main body portion 33 is disposed in the supporting hole 21d. In this specification, elements in an insertion relationship, such as "the valve member 30 and the valve-member guide hole 21c", "the main body portion 33 and the supporting hole 21d", or "the second stem portion 27b of the driving shaft 25 and the stem hole 22c of the driving-shaft supporting portion 22", have the same shapes (diameters, contours), where the meaning of "the same shapes" includes a shape of a first element being slightly smaller than a shape of a second element and the first element being movable with respect to the second element in an insertion direction. The transverse sectional contour of the main body portion 33 and the shape of the supporting hole 21d may be a polygonal shape other than the square shape, for example, a regular hexagonal shape or the like. In the supporting hole 21d, rotation about the axis L of the main body portion 33 is restricted, and movement in the direction of the axis L of the main body portion 33 is allowed. That is, the supporting member 20 supports the main body portion 33 in a manner that restricts the rotation about the axis L of the main body portion 33 and allows the movement in the direction of axis L of the main body portion 33.

An upper portion of the main body portion 33 is an internal thread portion 33a. The internal thread portion 33a includes an internal thread 33c. The internal thread 33c is disposed on the inner circumferential surface of the internal thread portion 33a. The external thread 26c of the driving shaft 25 is screwed into the internal thread 33c. Lubricant in a screwing section between the internal thread 33c of the main body portion 33 made of synthetic resin and the external thread 26c of the driving shaft 25 made of metal can be omitted. The main body portion 33 includes a lateral hole 33b. The lateral hole 33b is disposed below the internal thread portion 33a. The lateral hole 33b extends from the outer peripheral surface to the inner circumferential surface of the main body portion 33. The lateral hole 33b is connected to an inner space 33d of the main body portion 33. An inner space 30d of the valve member 30, the inner space 33d of the main body portion 33, and the lateral hole 33b of the main body portion 33 form a pressure equalizing passage 39. The pressure equalizing passage 39 connects the valve port 13a to the back-pressure chamber 29 in the valve-closing state.

The press-fitting frame portion 34 includes a cylindrical portion 34a and a flange portion 34b. The transverse sectional contour of the cylindrical portion 34a has a square shape. The cylindrical portion 34a is embedded in a lower portion of the main body portion 33. The cylindrical portion 34a is press-fitted into a hole 30c, which has a square shape and is provided in an upper surface 30a of the valve member 30. The internal thread member 32 is fixed to the valve member 30. The flange portion 34b has a circular annular plate-like shape. The flange portion 34b projects radially outwards at the upper end of the cylindrical portion 34a. The flange portion 34b is disposed on the upper surface 30a of the valve member 30. The flange portion 34b forms an annular groove 35 together with a stepped cut-out portion disposed in the periphery of the upper surface 30a of the valve member 30. The annular groove 35 holds the sealing member 36, which has a circular annular shape.

The sealing member 36 is disposed between the valve member 30 and the supporting member 20 in a radially compressed state. The sealing member 36 seals a gap between the valve member 30 and the supporting member 20. The sealing member 36 separates the back-pressure chamber 29 from the valve chamber 14.

The sealing member 36 includes a sealing portion and an outer cap portion. The sealing portion is a component that has a circular annular shape and is made of a rubber-like elastic material (rubber material or synthetic resin with rubber-like elasticity). The sealing portion is, for example, an O-ring. The outer cap portion is a component that has a circular annular band shape and is made of synthetic resin with less elastic deformation than the sealing portion, such as polytetrafluoroethylene (PTFE) or the like. The outer cap portion covers the outer peripheral part of the sealing portion. The outer circumferential surface of the outer cap portion is in contact with the inner circumferential surface of the valve-member guide hole 21c. When the valve member 30 moves in the up-and-down direction, the outer circumferential surface of the outer cap portion slides on the inner circumferential surface of the valve-member guide hole 21c. Material of the outer cap portion is selected on the basis of a sliding property, a foreign matter resistance property, and a wear resistance property. The sealing member 36 does not have to include the outer cap portion as long as the sealing member 36 includes the sealing portion.

The valve-member driving section 40 moves the valve member 30 in the up-and-down direction to bring the valve member 30 into contact with the valve seat 13b of the valve seat member 13 and separate the valve member 30 from the valve seat 13b of the valve seat member 13.

The valve-member driving section 40 includes a stator 42, a rotor 43, a rotor shaft 44, a connecting member 45, and the planetary gear mechanism 50. The stator 42 is disposed outside the can 18. The rotor 43 is rotatably disposed inside the can 18. The rotor 43 is connected to the rotor shaft 44 via the connecting member 45, which has a circular plate-like shape. The stator 42 and the rotor 43 are members of an electric motor. The planetary gear mechanism 50 reduces the rotational speed of the rotor 43.

The planetary gear mechanism 50 is disposed in the rotor 43. The planetary gear mechanism 50 includes a gear case 51, a sun gear 52, a fixed ring gear 53, multiple planet gears 54, a carrier 55, and an output gear 56 as an output part. The gear case 51 has a circular cylindrical shape. The gear case 51 is fixed to an upper portion of the supporting member 20. The sun gear 52 is integrated with the connecting member 45. The rotor shaft 44 extends through the inside of the sun gear 52. The fixed ring gear 53 is an annulus gear fixed to the upper end of the gear case 51. The planet gears 54 surround the sun gear 52. The planet gears 54 mate with the sun gear 52 and the fixed ring gear 53. The carrier 55 rotatably supports the planet gears 54. The output gear 56 is an internal gear that has a bottomed cylindrical shape. The output gear 56 mates with the planet gears 54. The connecting portion 27c of the driving shaft 25 is press-fitted into a through hole in the bottom of the output gear 56. The driving shaft 25 rotates with the output gear 56.

The electric valve 1 includes the planetary gear mechanism 50, whose mechanism type is 3K, as a reduction mechanism. The electric valve 1 may include a reduction mechanism whose mechanism type is other than 3K. The electric valve 1 may include, for example, a planetary gear mechanism combined with two or more 2K-H-type planetary gear mechanisms, or a reduction mechanism including a worm drive (a worm and a worm wheel).

In the present embodiment, each axis of the tubular member 11, the holder 12, the valve seat member 13 (the valve port 13a, the valve seat 13b), the supporting member 20 (the valve-member guide hole 21c, the supporting hole 21d, the stem hole 22c), the rolling bearing 23, the driving shaft 25, the valve member 30, the rotor shaft 44, and the output gear 56 coincide with the axis L. The direction of the axis L is also a direction of advancing and retracting the valve member 30.

Next, an example of the operation of the electric valve 1 according to the present embodiment is described.

In the electric valve 1, the rotational force of the rotor 43 is generated by applying current to the stator 42. The planetary gear mechanism 50 reduces the speed of the rotational force of the rotor 43 and transmits the rotational force from the output gear 56 to the driving shaft 25. When the driving shaft 25 rotates, a screw-feed action moves the internal thread member 32 in the up-and-down direction according to the rotational direction of the driving shaft 25. The valve member 30 moves in the up-and-down direction with the internal thread member 32.

When the internal thread member 32 moves downwards, the valve member 30 moves downwards. A lower end 30b of the valve member 30 comes into contact with the valve seat 13b, and the valve port 13a closes (the valve-closing state). In the valve-closing state, the valve port 13a is connected to the back-pressure chamber 29 via the pressure equalizing passage 39. Therefore, an upward fluid pressure applied to the valve member 30 is counterbalanced by a downward fluid pressure applied to the valve member 30.

In the valve-closing state, when the internal thread member 32 moves upwards, the valve member 30 moves upwards. The lower end 30b of the valve member 30 separates from the valve seat 13b, and the valve port 13a opens (a valve-opening state). Then, as illustrated in Fig. 2, when the valve member 30 moves to an upper-limit position where the valve member 30 is farthest from the valve seat 13b, the electric valve 1 is in the full-open state. In the full-open state, the external thread portion 26 of the driving shaft 25 enters the inner space 33d of the internal thread member 32 to a position where the external thread portion 26 closes the lateral hole 33b of the internal thread member 32. Therefore, the pressure equalizing passage 39 is closed by the external thread portion 26.

With this configuration, in the electric valve 1 according to the present embodiment, the rolling bearing 23 rotatably supports the driving shaft 25. The external thread portion 26 of the driving shaft 25 is screwed into the internal thread member 32 fixed to the valve member 30. The supporting member 20 supports the internal thread member 32 in the manner that restricts the rotation of the internal thread member 32 about the axis L and allows the movement of the internal thread member 32 in the direction of the axis L. As a result, when the driving shaft 25 connected to the planetary gear mechanism 50 rotates, the screw-feed action moves the internal thread member 32 in the direction of the axis L. The movement of the internal thread member 32 applies force in the direction of the axis L to the driving shaft 25, and the force is distributed to the balls 23c of the rolling bearing 23. Therefore, concentration of the force can be suppressed in the electric valve 1, and it is possible to enhance the life of the electric valve 1. Additionally, the screw-feed action advances and retracts the valve member 30 with respect to the valve port 13a. Therefore, the electric valve 1 has a low power consumption compared to an electric valve with a structure including a valve opening spring.

In the electric valve 1, the supporting member 20 includes the valve-member guide hole 21c in which the valve member 30 is disposed. The internal thread member 32 includes the lateral hole 33b that extends from the outer circumferential surface to the inner circumferential surface of the internal thread member 32. The inner space 30d of the valve member 30, the inner space 33d of the internal thread member 32, and the lateral hole 33b of the internal thread member 32 form the pressure equalizing passage 39 that connects the valve port 13a to the back-pressure chamber 29 in the valve-closing state. In the full-open state where the valve member 30 is farthest from the valve seat 13b, the external thread portion 26 of the driving shaft 25 enters the internal thread member 32 to the position where the external thread portion 26 closes the lateral hole 33b. As a result, the external thread portion 26 of the driving shaft 25 closes the pressure equalizing passage 39 in the full-open state. Therefore, entry of foreign matter included in fluid into the back-pressure chamber 29 can be suppressed.

In the electric valve 1, the driving shaft 25 includes the base portion 27 that is integrally coupled to the external thread portion 26 and is connected to the output gear 56 of the planetary gear mechanism 50. The rolling bearing 23 is the radial ball bearing. The supporting member 20 supports the outer ring 23a of the rolling bearing 23. The second stem portion 27b of the base portion 27 and the nut 28, which is screwed onto the external thread portion 26, hold the inner ring 23b of the rolling bearing 23 therebetween. As a result, the rolling bearing 23 can support the driving shaft 25 with a simple structure combining the external thread portion 26 and the nut 28. Additionally, the pressurization of the inner ring 23b of the rolling bearing 23 can be easily controlled by using the nut 28 compared to a structure in which the driving shaft 25 is press-fitted into the inner ring 23b of the rolling bearing 23.

In the electric valve 1, the transverse sectional contour of the internal thread member 32 has the square shape. The valve-member supporting portion 21 of the supporting member 20 includes the partition wall 21a that divides the inner space of the supporting member 20 in the direction of the axis L. The partition wall 21a includes the supporting hole 21d in which the internal thread member 32 is disposed. The supporting hole 21d has the square shape that is the same shape as the transverse sectional contour of the internal thread member 32. As a result, the supporting member 20 can support the internal thread member 32 in the manner that restricts the rotation of the internal thread member 32 about the axis L and allows the movement of the internal thread member 32 in the direction of the axis L in a relatively simple structure.

The electric valve 1 according to the present embodiment, as illustrated in Fig. 1, has a distance D1 between the nut 28 and the internal thread member 32, and a distance D2 between the partition wall 21a of the supporting member 20 and the internal thread member 32. The maximum movement distance of the valve member 30 is limited to the minimum one of the distances D1 or D2 in the valve-closing state.

On the other hand, the electric valve 901 according to the related art, as illustrated in Fig. 7, has a distance E1 in a slit 957a of an output stem 957 of the planetary gear mechanism 950, a distance E2 between the output stem 957 and the rotary elevation shaft 964, a distance E3 between the bearing member 922 and the spring receiving member 961, a distance E4 between the bearing member 922 and the thrust transmitting member 963, and a distance E5 between the valve member 930 and a partition wall 921a. The maximum movement distance of the valve member 930 is limited to the minimum one of the distances E1 to E5 in the valve-closing state.

Where the maximum movement distance of the valve member is α, two distances (the distances D1, D2) should be set to α or more in the electric valve 1 according to the present embodiment, while all five distances (the distances E1 to E5) should be set to α or more in the electric valve 901 according to the related art. Therefore, when the electric valve 1 according to the present embodiment has the same size as the electric valve 901 according to the related art, the electric valve 1 has the maximum movement distance of the valve member 30 greater than that of the electric valve 901.

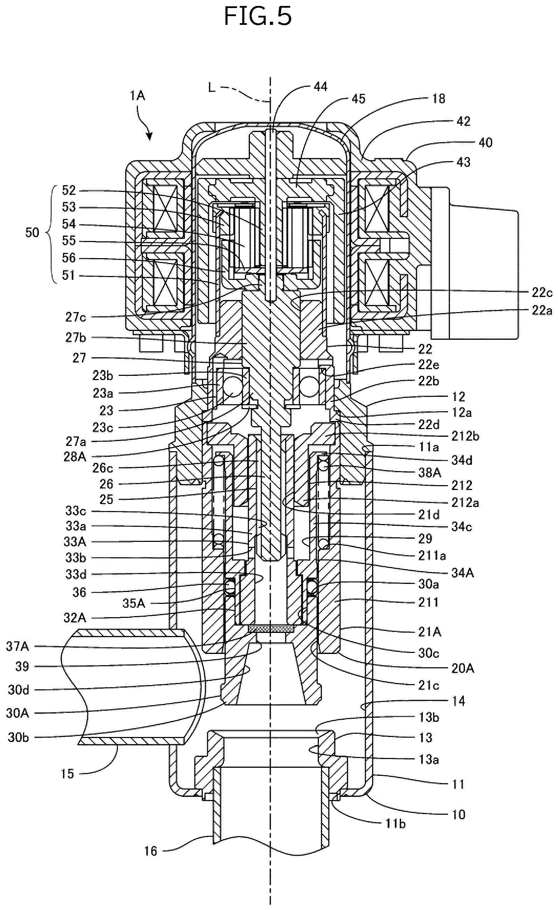

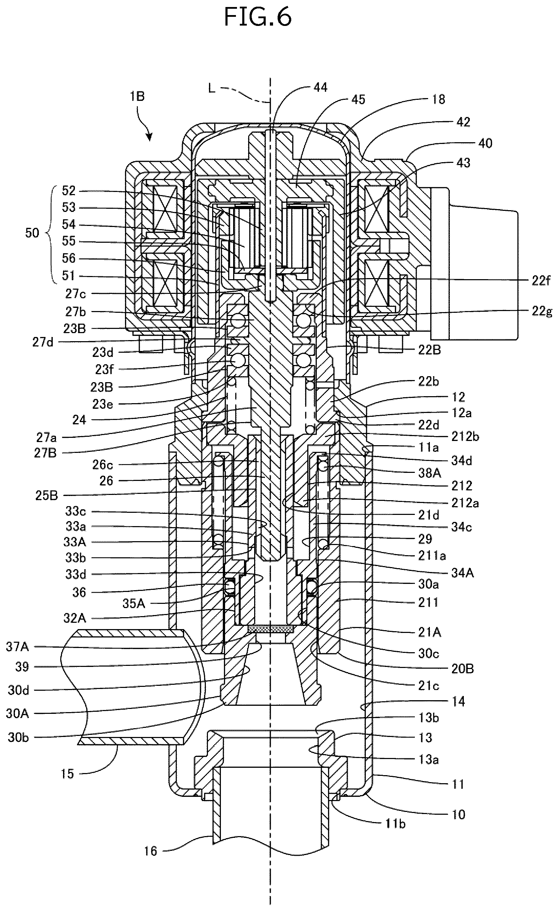

Electric valves 1A and 1B, according to other embodiments of the present invention, are described below with reference to Fig. 5 and Fig. 6. In the description below, elements that differ from those of the electric valve 1 are mainly described. Elements that are the same (including elements with substantially the same functions) as those of the electric valve 1 are denoted by the same reference signs as those of the electric valve 1, and detailed descriptions of these elements are omitted.

The electric valve 1A, illustrated in Fig. 5, includes a supporting member 20A, a valve member 30A, and an internal thread member 32A.

The supporting member 20A includes a valve-member supporting portion 21A and a driving-shaft supporting portion 22.

The valve-member supporting portion 21A includes a first member 211 and a second member 212.

The first member 211 has a substantially circular cylindrical shape. An upper portion of the first member 211 is press-fitted into a holder 12. A lower portion of the first member 211 and a valve seat member 13 are arranged in an up-and-down direction with a space therebetween. The lower portion of the first member 211 faces the valve seat member 13 in the up-and-down direction. An inner space of the first member 211 is a valve-member guide hole 21c in which the valve member 30A is disposed. The first member 211 includes a spring receiving surface 211a. The spring receiving surface 211a is a circular annular plane facing upwards and is disposed in the inner circumferential surface of the first member 211.

The second member 212 includes a cylindrical portion 212a and a flange portion 212b. The cylindrical portion 212a is disposed inside the first member 211. The transverse sectional outer contour of the cylindrical portion 212a has a circular shape, and the transverse sectional inner contour of the cylindrical portion 212a has a square shape. An inner space of the cylindrical portion 212a is a supporting hole 21d in which the internal thread member 32A is disposed. The flange portion 212b has a circular annular shape. The flange portion 212b projects radially outwards at the upper end of the cylindrical portion 212a. The outer peripheral edge of the flange portion 212b is bonded to the upper end of the first member 211. The second member 212 restricts the rotation about an axis L of the internal thread member 32A.

A second stem portion 27b of a driving shaft 25 and a retaining ring 28A fitted into a groove of a first stem portion 27a hold an inner ring 23b of a rolling bearing 23 therebetween.

The valve member 30A opens and closes a valve port 13a. The valve member 30A has a substantially circular cylindrical shape. The outer diameter of the valve member 30A is equal to the diameter of the valve-member guide hole 21c of the supporting member 20A. The valve member 30A is inserted into the valve-member guide hole 21c. The valve member 30A is disposed in the valve-member guide hole 21c. The valve member 30A can slide and move in the up-and-down direction in the valve-member guide hole 21c. The valve member 30A faces the valve seat member 13 in the up-and-down direction. The supporting member 20A guides an up-and-down movement of the valve member 30A. The supporting member 20A supports the valve member 30A so that the valve member 30A is allowed to advance and retract with respect to the valve port 13a.

The internal thread member 32A includes a main body portion 33A and a press-fitting frame portion 34A.

The main body portion 33A has a substantially quadrilateral cylindrical shape. In the present embodiment, the transverse sectional contour of the main body portion 33A has a square shape. The supporting hole 21d of the supporting member 20A has a square shape that is the same shape as the transverse sectional contour of the main body portion 33A. The main body portion 33A is inserted into the supporting hole 21d. The main body portion 33A is disposed in the supporting hole 21d. The supporting member 20A (the second member 212) supports the main body portion 33A in a manner that restricts the rotation about the axis L of the main body portion 33A and allows the movement in the direction of the axis L of the main body portion 33A.

An upper portion of the main body portion 33A is an internal thread portion 33a. The internal thread portion 33a includes an internal thread 33c. The internal thread 33c is disposed on the inner circumferential surface of the internal thread portion 33a. An external thread 26c of the driving shaft 25 is screwed into the internal thread 33c. The main body portion 33A includes a lateral hole 33b. The lateral hole 33b is disposed below the internal thread portion 33a. The lateral hole 33b extends from the outer circumferential surface to the inner circumferential surface of the main body portion 33A. The lateral hole 33b is connected to an inner space 33d of the main body portion 33A. An inner space 30d of the valve member 30A, the inner space 33d of the main body portion 33A, and the lateral hole 33b of the main body portion 33A form a pressure equalizing passage 39. The pressure equalizing passage 39 connects the valve port 13a to a back-pressure chamber 29 in the valve-closing state.

The press-fitting frame portion 34A includes a cylindrical portion 34c and a flange portion 34d. A lower portion of the main body portion 33A is disposed in a lower portion of the cylindrical portion 34c. The lower portion of the cylindrical portion 34c is press-fitted into a hole 30c disposed in an upper surface 30a of the valve member 30A. As a result, the internal thread member 32A (the main body portion 33A and the press-fitting frame portion 34A) is fixed to the valve member 30A. In the hole 30c of the valve member 30A, a filter 37A is disposed between the valve member 30A and the main body portion 33A. The filter 37A catches foreign matter included in fluid flowing through the pressure equalizing passage 39. The flange portion 34d has a circular annular plate-like shape. The flange portion 34d projects radially outwards at the upper end of the cylindrical portion 34c. The flange portion 34d and the spring receiving surface 211a of the first member 211 are arranged in the up-and-down direction with a space therebetween. A valve opening spring 38A, which is in a compressed state, is disposed between the flange portion 34d and the spring receiving surface 211a. The valve opening spring 38A pushes the flange portion 34d (i.e., the valve member 30A) upwards.

A space in which the press-fitting frame portion 34A in the valve-member guide hole 21c is disposed is the back-pressure chamber 29. A sealing member 36 is held by an annular groove 35A formed by the valve member 30A and the internal thread member 32A. The sealing member 36 is disposed between the internal thread member 32A (the press-fitting frame portion 34A) and the supporting member 20A (the first member 211) in a radially compressed state. The sealing member 36 seals a gap between the valve member 30A and the supporting member 20A. The sealing member 36 separates the back-pressure chamber 29 from a valve chamber 14.

The electric valve 1B, illustrated in Fig. 6, includes a supporting member 20B, the valve member 30A, an internal thread member 32A, two rolling bearings 23B, and a driving shaft 25B.

The supporting member 20B includes a valve-member supporting portion 21A and a driving-shaft supporting portion 22B.

The driving-shaft supporting portion 22B has a substantially circular cylindrical shape as a whole. A projecting portion 22f, which has a circular annular shape, is provided at the upper end of the driving-shaft supporting portion 22B and projects radially inwards. The projecting portion 22f includes a receiving surface 22g. The receiving surface 22g is a circular annular plane facing downwards.

The driving shaft 25B integrally includes an external thread portion 26 and a base portion 27B. The base portion 27B includes a first stem portion 27a, a second stem portion 27b, a connecting portion 27c, and a flange portion 27d. The flange portion 27d has a circular annular plate-like shape. The inner peripheral edge of the flange portion 27d is connected to the outer circumferential surface of the second stem portion 27b.

The two rolling bearings 23B are thrust ball bearings. The rolling bearing 23B includes an upper bearing washer 23d, a lower bearing washer 23e, and balls 23f. The balls 23f are multiple rolling elements disposed between the upper bearing washer 23d and the lower bearing washer 23e. The two rolling bearings 23B are arranged in the driving-shaft supporting portion 22B in an up-and-down direction (a direction of an axis L). The flange portion 27d of the driving shaft 25B is disposed between the two rolling bearings 23B. The upper bearing washer 23d of the upper one of the two rolling bearings 23B is in contact with the receiving surface 22g disposed at the upper end of the driving-shaft supporting portion 22B. A holding spring 24, which is in a compressed state, is disposed between the lower bearing washer 23e of the lower one of the two rolling bearings 23B and a second member 212 of the supporting member 20B. The lower one of the two rolling bearings 23B is pressed upwards by the holding spring 24. The upper bearing washer 23d of the upper one of the two rolling bearings 23B is pressed to the receiving surface 22g. The second stem portion 27b of the driving shaft 25B is disposed in the two rolling bearings 23B. The two rolling bearings 23B rotatably support the driving shaft 25B. The upper one of the two rolling bearings 23B mainly receives an upward force applied to the valve member 30A. The lower one of the two rolling bearings 23B mainly receives a downward force applied to the valve member 30A.

The electric valves 1A and 1B also have the functions and effects similar to or the same as those of the electric valve 1 described above.

Especially, in the electric valve 1A, because the valve member 30A is pushed by the valve opening spring 38A, it is possible to reduce hysteresis characteristics in the electric valve 1A when the valve member 30A moves in the up-and-down direction. Additionally, in the electric valve 1B, because the two rolling bearings 23B receive the pressure applied to the valve member 30A and the driving shaft 25B, it is possible to effectively enhance the life of the electric valve 1B used in a system with a relatively large difference between inlet and outlet fluid pressure.

The embodiments of the present invention are described above. The present invention, however, is not limited to the configurations of these embodiments. Embodiments obtained by appropriately adding, removing, or modifying components according to the embodiment described above by a person skilled in the art, and an embodiment obtained by appropriately combining features of the embodiment are included in the scope of the present invention without departing from the spirit of the present invention.

### Reference Signs List

1 ... electric valve, 10 ... valve body, 11 ... tubular member, 11a ... upper end opening, 11b ... lower end opening, 12 ... holder, 12a ... holding surface, 13 ... valve seat member, 13a ... valve port, 13b ... valve seat, 14 ... valve chamber, 15 ... first conduit, 16 ... second conduit, 18 ... can, 20 ... supporting member, 21 ... valve-member supporting portion, 21a ... partition wall, 21b ... spring chamber, 21c ... valve-member guide hole, 21d **...** supporting hole, 22 **...** driving-shaft supporting portion, 22a ... upper portion, 22b ... lower portion, 22c ... stem hole, 22d ... projecting portion, 22e ... receiving surface, 23 ... rolling bearing, 24 ... holding spring, 25 ... driving shaft, 26 ... external thread portion, 26c ... external thread, 27 ... base portion, 27a ... first stem portion, 27b ... second stem portion, 27c ... connecting portion, 28 ... nut, 29 ... back-pressure chamber, 30 ... valve member, 30a ... upper surface, 30b ... lower end, 30c ... hole, 30d ... inner space, 32 ... internal thread member, 33 ... main body portion, 33a ... internal thread portion, 33b ... lateral hole, 33c ... internal thread, 33d ... inner space, 34 ... press-fitting frame portion, 34a ... cylindrical portion, 34b ... flange portion, 35 ... annular groove, 36 ... sealing member, 39 ... pressure equalizing passage, 40 ... valve-member driving section, 42 ... stator, 43 ... rotor, 44 ... rotor shaft, 45 ... connecting member, 50 ... planetary gear mechanism, 51 ... gear case, 52 ... sun gear, 53 ... fixed ring gear, 54 ... planet gear, 55 ... carrier, 56 ... output gear, L ... axis, 1A, 1B ... electric valve, 20A, 20B ... supporting member, 21A ... valve-member supporting portion, 211 ... first member, 211a ... spring receiving surface, 212 ... second member, 212a ... cylindrical portion, 212b ... flange portion, 22B ... driving-shaft supporting portion, 22f ... projecting portion, 22g ... receiving surface, 23B ... rolling bearing, 23d ... upper bearing washer, 23e **...** lower bearing washer, 23f **...** ball, 25B ... driving shaft, 27B ... base portion, 27d ... flange portion, 28A ... retaining ring, 30A ... valve member, 32A ... internal thread member, 33A ... main body portion, 34A ... press-fitting frame portion, 34c ... cylindrical portion, 34d ... flange portion, 35A ... annular groove, 37A ... filter, 38A ... valve opening spring

## Claims

1. An electric valve (1) comprising:
a valve body (10) that includes a valve chamber (14) and a valve port (13a);
a valve member (30) that opens and closes the valve port (13a);
a supporting member (20) that supports the valve member (30) to be capable of advancing and retracting with respect to the valve port (13a);
a driving shaft (25) that includes an external thread portion (26) and is disposed in a direction of advancing and retracting the valve member (30);
a rolling bearing (23) that rotatably supports the driving shaft (25) and is held by the supporting member (20);
a planetary gear mechanism (50) that is connected to the driving shaft (25); and
an internal thread member (32) with a cylindrical shape that is fixed to the valve member (30) and into which the external thread portion (26) is screwed,
wherein the supporting member (20) supports the internal thread member (32) in a manner that restricts rotation of the internal thread member (32) about an axis (L) and allows movement of the internal thread member (32) in a direction of the axis (L),
wherein
the supporting member (20) includes a valve-member guide hole (21c) in which the valve member (30) is disposed,
**characterized in that**,
the internal thread member (32) includes a lateral hole (33b) that extends from an outer surface to an inner surface of the internal thread member (32),
wherein an inner space (33d) of the internal thread member (32) and the lateral hole (33b) of the internal thread member (32) form a pressure equalizing passage (39) that connects, in a valve-closing state where a first end of the valve member (30) is in contact with a valve seat (13b) of the valve port (13a), the valve port (13a) to a back-pressure chamber (29), which is a space next to a second end of the valve member (30) in the valve-member guide hole (21c), and
wherein the external thread portion (26) enters the internal thread member (32) to a position where the external thread portion (26) closes the lateral hole (33b) in a full-open state where the valve member (30) is farthest from the valve seat (13b).

2. The electric valve (1) according to claim 1,
wherein the driving shaft (25) includes a base portion (27) that is integrally coupled to the external thread portion (26) and is connected to an output part of the planetary gear mechanism (50),
wherein the rolling bearing (23) is a radial ball bearing,
wherein the supporting member (20) supports an outer ring of the rolling bearing (23), and
wherein the base portion (27) and a nut (28) screwed onto the external thread portion (26) hold an inner ring of the rolling bearing (23) therebetween.

3. The electric valve (1) according to claim 1 or 2,
wherein a transverse sectional contour of the internal thread member (32) has a polygonal shape,
wherein the supporting member (20) includes a partition wall (21a) that divides an inner space of the supporting member (20) in the direction of the axis (L),
wherein the partition wall (21a) includes a supporting hole (21d) in which the internal thread member (32) is disposed, and
wherein the supporting hole (21d) has a same shape as the transverse sectional contour of the internal thread member (32).

## Patentansprüche

1. Ein elektrisches Ventil (1), umfassend:
einen Ventilkörper (10), der eine Ventilkammer (14) und eine Ventilöffnung (13a) umfasst;
ein Ventilelement (30), das die Ventilöffnung (13a) öffnet und schließt;
ein Stützelement (20), das das Ventilelement (30) so trägt, dass es relativ zur Ventilöffnung (13a) vorrücken und zurückweichen kann;
eine Antriebswelle (25), die einen Außengewindeteil (26) umfasst und in Richtung des Vorrückens und Zurückweichens des Ventilelements (30) angeordnet ist;
ein Wälzlager (23), das die Antriebswelle (25) drehbar trägt und vom Stützelement (20) gehalten wird;
einen Planetengetriebemechanismus (50), der mit der Antriebswelle (25) verbunden ist; und
ein Innengewindeelement (32) in zylindrischer Form, das am Ventilelement (30) befestigt ist und in das der Außengewindeteil (26) eingeschraubt ist,
wobei das Stützelement (20) das Innengewindeelement (32) so trägt, dass eine Rotation des Innengewindeelements (32) um eine Achse (L) verhindert wird und eine Bewegung des Innengewindeelements (32) in Richtung der Achse (L) ermöglicht wird,
wobei das Stützelement (20) ein Ventilelement-Führungsloch (21c) umfasst, in dem das Ventilelement (30) angeordnet ist,
**dadurch gekennzeichnet, dass** das Innengewindeelement (32) ein Querloch (33b) umfasst, das sich von einer Außenfläche zu einer Innenfläche des Innengewindeelements (32) erstreckt,
wobei ein Innenraum (33d) des Innengewindeelements (32) und das Querloch (33b) des Innengewindeelements (32) eine Druckausgleichsleitung (39) bilden, die im Ventilschließzustand, in dem ein erstes Ende des Ventilelements (30) mit einem Ventilsitz (13b) der Ventilöffnung (13a) in Kontakt ist, die Ventilöffnung (13a) mit einer Gegendruckkammer (29) verbindet, welche ein Raum neben einem zweiten Ende des Ventilelements (30) im Ventilelement-Führungsloch (21c) ist, und
wobei der Außengewindeteil (26) in das Innengewindeelement (32) bis zu einer Position eintritt, an der der Außengewindeteil (26) das Querloch (33b) im vollständig geöffneten Zustand, in dem das Ventilelement (30) am weitesten vom Ventilsitz (13b) entfernt ist, verschließt.

2. Das elektrische Ventil (1) gemäß Anspruch 1,
wobei die Antriebswelle (25) einen Basisteil (27) umfasst, der fest mit dem Außengewindeteil (26) gekoppelt ist und mit einem Ausgangsteil des Planetengetriebemechanismus (50) verbunden ist,
wobei das Wälzlager (23) ein Radialkugellager ist,
wobei das Stützelement (20) einen Außenring des Wälzlagers (23) trägt, und
wobei der Basisteil (27) und eine Mutter (28), die auf den Außengewindeteil (26) aufgeschraubt ist, einen Innenring des Wälzlagers (23) dazwischen halten.

3. Das elektrische Ventil (1) gemäß Anspruch 1 oder 2,
wobei ein Querschnittsumriss des Innengewindeelements (32) eine polygonale Form aufweist,
wobei das Stützelement (20) eine Trennwand (21a) umfasst, die einen Innenraum des Stützelements (20) in Richtung der Achse (L) unterteilt,
wobei die Trennwand (21a) ein Stützloch (21d) umfasst, in dem das Innengewindeelement (32) angeordnet ist, und
wobei das Stützloch (21d) die gleiche Form wie der Querschnittsumriss des Innengewindeelements (32) hat.

## Revendications

1. Soupape électrique (1) comportant :
un corps de soupape (10) qui inclut une chambre de soupape (14) et un orifice de soupape (13a) ;
un élément de soupape (30) qui ouvre et ferme l'orifice de soupape (13a) ;
un élément de support (20) qui supporte l'élément de soupape (30) pour pouvoir avancer et se rétracter par rapport à l'orifice de soupape (13a) ;
une tige d'entraînement (25) qui inclut une portion de filetage externe (26) et est disposée dans une direction d'avance et de rétraction de l'élément de soupape (30) ;
un palier à roulement (23) qui supporte en rotation la tige d'entraînement (25) et est maintenu par l'élément de support (20) ;
un mécanisme à engrenages planétaires (50) qui est relié à la tige d'entraînement (25) ; et
un élément de filetage interne (32) ayant une forme cylindrique qui est fixé à l'élément de soupape (30) et dans lequel la portion de filetage externe (26) est vissée,
dans laquelle l'élément de support (20) supporte l'élément de filetage interne (32) d'une manière qui restreint une rotation de l'élément de filetage interne (32) autour d'un axe (L) et permet un mouvement de l'élément de filetage interne (32) dans une direction de l'axe (L),
dans laquelle l'élément de support (20) inclut un trou de guidage d'élément de soupape (21c) dans lequel l'élément de soupape (30) est disposé,
**caractérisée en ce que** l'élément de filetage interne (32) inclut un trou latéral (33b) qui s'étend d'une surface extérieure à une surface intérieure de l'élément de filetage interne (32),
dans laquelle un espace intérieur (33d) de l'élément de filetage intérieur (32) et le trou latéral (33b) de l'élément de filetage intérieur (32) forment un passage d'équilibrage de pression (39) qui relie, dans un état de fermeture de soupape où une première extrémité de l'élément de soupape (30) est en contact avec un siège de soupape (13b) de l'orifice de soupape (13a), l'orifice de soupape (13a) à une chambre de contre-pression (29), qui est un espace situé à côté d'une seconde extrémité de l'élément de soupape (30) dans le trou de guidage d'élément de soupape (21c), et
dans laquelle la portion de filetage externe (26) pénètre dans l'élément de filetage interne (32) jusqu'à une position où la portion de filetage externe (26) ferme le trou latéral (33b) dans un état entièrement ouvert où l'élément de soupape (30) est le plus éloigné du siège de soupape (13b).

2. Soupape électrique (1) selon la revendication 1,
dans laquelle la tige d'entraînement (25) inclut une portion de base (27) qui est couplée d'un seul tenant à la portion de filetage externe (26) et est reliée à une partie de sortie du mécanisme à engrenages planétaires (50),
dans laquelle le palier à roulement (23) est un roulement à billes radial,
dans laquelle l'élément de support (20) supporte une bague extérieure du palier à roulement (23), et
dans laquelle la portion de base (27) et un écrou (28) vissé sur la portion de filetage externe (26) maintiennent une bague intérieure du palier à roulement (23) entre ceux-ci.

3. Soupape électrique (1) selon la revendication 1 ou 2,
dans laquelle un contour de section transversale de l'élément de filetage interne (32) a une forme polygonale,
dans laquelle l'élément de support (20) inclut une paroi de séparation (21a) qui divise un espace intérieur de l'élément de support (20) dans la direction de l'axe (L),
dans laquelle la paroi de séparation (21a) inclut un trou de support (21d) dans lequel l'élément de filetage interne (32) est disposé, et
dans laquelle le trou de support (21d) a une même forme que le contour de section transversale de l'élément de filetage interne (32).
